Europäisches Patentamt

European Patent Office

Office européen des brevets

(19)

(11) EP 0 789 898 B1

(12) EUROPÄISCHE PATENTSCHRIFT

(45) Veröffentlichungstag und Bekanntmachung des Hinweises auf die Patenterteilung:
15.07.1998 Patentblatt 1998/29

(21) Anmeldenummer: 95934054.8

(22) Anmeldetag: 13.10.1995

(51) Int Cl.6: G08G 1/017, G07B 15/00, G01S 13/87

(86) Internationale Anmeldenummer:
PCT/DE95/01408

(87) Internationale Veröffentlichungsnummer:
WO 96/14626 (17.05.1996 Gazette 1996/22)

(54) VERFAHREN ZUR POSITIONSBESTIMMUNG EINES FAHRZEUGES AUF EINER STRASSE

METHOD OF DETERMINING A VEHICLE'S POSITION ON A ROAD

PROCEDE POUR DETERMINER LA POSITION D'UN VEHICULE SUR UNE ROUTE

(84) Benannte Vertragsstaaten:
AT DE FR GB SE

(30) Priorität: 05.11.1994 DE 4439708

(43) Veröffentlichungstag der Anmeldung:
20.08.1997 Patentblatt 1997/34

(73) Patentinhaber: ROBERT BOSCH GMBH
70442 Stuttgart (DE)

(72) Erfinder: GRABOW, Wilhelm
D-31139 Hildesheim (DE)

(56) Entgegenhaltungen:
EP-A- 0 578 060          EP-A- 0 588 045
WO-A-92/08954          WO-A-92/09904
DE-A- 4 213 880          DE-A- 4 307 414
GB-A- 1 204 484

**Beschreibung**

Stand der Technik

Die Erfindung geht aus von einem Verfahren zur Positionsbestimmung eines Fahrzeugs, das sich auf einer Straße in der Kommunikationszone einer kurzreichweitigen Sende-/Empfangsfeldes einer ersten Bake bewegt und mit seinem Fahrzeuggerät eine Datenübertragung durchführt, nach dem Oberbegriff des Hauptanspruchs. Im Bereich eines umfassenden Verkehrsmanagements gibt es zukünftig viele neue Dienste, bei denen die Position desjenigen Fahrzeuges ermittelt werden muß, mit dem gerade eine Datenübertragung durchgeführt wird. Insbesondere bei gebührenpflichtigen Diensten, beispielsweise bei der automatischen Erhebung von Straßenbenutzungsgebühren oder bei der Prüfung von Benutzungsberechtigungen bestimmter Fahrspuren muß sichergestellt werden, daß auch für die Fälle, wenn sich mehrere Fahrzeuge im Sende-/Empfangsbereich einer Bake befinden, die momentane Datenübertragung gezielt zu nur einem einzigen Fahrzeug zugeordnet wird. Aus der Veröffentlichung "Microstrip array antenna for an automatic road pricing system", European Microwafe Conference 1993, Madrid, Seite 351 bis 353 ist schon bekannt, mittels mehrerer Antennen auf einer Fahrspur so schmale Kommunikationszonen zu bilden, daß sich jeweils nur ein einziges Fahrzeug innerhalb der Kommunikationszone befinden kann. Hierbei sind z. B. mehrere fest ausgerichtete Antennen pro Fahrspur zur Erzeugung mehrerer schmaler Kommunikationszonen vorgesehen. Gemäß der DE-OS 42 22 014 ist an der Bake eine Antennenanordnung vorgesehen, die auf elektronischem Wege eine Nachführung, ein Richtdiagramm, auf ein bestimmtes Fahrzeug derart erzeugt, daß auf das betreffende Fahrzeug eine Hauptempfangskeule gerichtet ist und in Richtung der jeweils anderen benachbarten Objekte die Empfangsdämpfung gegenüber der Hauptempfangskeule hoch ist.

Der technische Aufwand dieser Lösungen ist vergleichsweise groß. Ein weiteres Problem ergibt sich auch dadurch, daß größere Kommunikationszonen, in der sich mehrere Fahrzeuge befinden können, nicht möglich sind. Andererseits ist es jedoch wünschenswert, bestimmte gebührenfreie Informations- und Warndienste an möglichst viele Fahrzeuge zu übermitteln, wenn z. B. infolge eines Unfalls ein Verkehrsstau droht oder witterungsbedingte Störungen vorliegen. Des weiteren steht bei einer großen Kommunikationszone mehr Zeit zur Datenübertragung zur Verfügung, so daß auch sehr schnell fahrende Fahrzeuge sicher erfaßt werden können.

Aus der DE-A-4 307 414 ist es schon bekannt, die Position eines Fahrzeuges aus zwei Geschwindigkeitssignalen zu bestimmen, wobei aber jeweils die zwei Komponenten des Geschwindigkeitssignals benützt werden. Es handelt sich hier um Verkehrsradargeräte.

Vorteile der Erfindung

Das erfindungsgemäße Verfahren zur Positionsbestimmung eines Fahrzeuges mit den kennzeichnenden Merkmalen des Hauptanspruchs hat den Vorteil, daß die vorgeschlagene Lösung ein einfaches Verfahren für die eindeutige Zuordnung einer Fahrzeugposition und einer Datenübertragung mit Hilfe der Geschwindigkeitsmessung darstellt. Besonders vorteilhaft ist, daß das Verfahren keine besonderen Anforderungen oder Änderungen hinsichtlich der Trägerfrequenz, Bandbreite, Modulation oder Übertragung spezieller Datensequenzen stellt. Es ist daher grundsätzlich kompatibel zum künftigen Standard der kurzreichweitigen Datenübertragung bei 5,8 GHz für Verkehrsanwendungen.

Durch die in den abhängigen Ansprüchen aufgeführten Maßnahmen sind vorteilhafte Weiterbildungen und Verbesserungen des im Hauptanspruch angegebenen Verfahrens möglich. Durch die gleichzeitige Messung der Geschwindigkeit mit Hilfe der beiden Baken wird in vorteilhafter Weise erreicht, daß durch die Verhältnisbildung zu jeder Datenübertragung vom Fahrzeug zu den Baken eine Fahrzeugposition berechnet werden kann, die zu den beiden Baken eine bestimmte Richtung hat.

Vorteilhaft ist weiter, daß der Start der Geschwindigkeitsmessungen beispielsweise durch eine in die Straße verlegte Induktionsschleife oder eine Infrarotlichtschranke ausgelöst werden kann, da diese Einrichtungen witterungsunabhängig sind und leicht in der Fahrbahndecke oder oberhalb der Fahrspur montiert werden können.

Wird dagegen eine genaue Positionsbestimmung benötigt, dann kann mit Hilfe einer dritten Bake eine dritte Geschwindigkeit gemessen werden und durch eine Vergleichsrechnung die exakte Fahrzeugposition ermittelt werden, da der räumliche Abstand zu den drei Baken festgelegt ist.

Für die Praxis erscheint die Anordnung rechts und links einer Fahrbahn bzw. einer Straße und oberhalb der Straße als besonders geeignet, da diese Anordnung auf die gleiche Kommunikationszone ausgerichtet werden kann.

Für Kontrollzwecke kann dabei vorteilhaft die Geschwindigkeitsmessung in vorgegebenen zeitlichen Abständen wiederholt werden.

Mit Hilfe der Positionsbestimmung kann eine an Baken empfangene Datenübertragung einem einzelnen Fahrzeug zugeordnet werden, auch wenn sich weitere Fahrzeuge in der Kommunikationszone befinden. Dieses ist insbesondere wichtig für gebührenpflichtige Dienste wie beispielsweise für die Abbuchung von Straßenbenutzungsgebühren oder für eine Prüfung von Fahrberechtigungen. Andererseits können auf einfache Weise nicht gebührenpflichtige Informationen mit allen Fahrzeugen ausgetauscht werden.

Sollte ein Mißbrauch oder Verstoß hinsichtlich der Dienste erkannt werden, dann kann auf einfache Weise eine Beweissicherung z. B. durch Fotografieren des Fahrzeugs durchgeführt werden.

Zwei Ausführungsbeispiele der Erfindung sind in der Zeichnung dargestellt und in der nachfolgenden Beschreibung näher erläutert. Es zeigen Figur 1 ein erstes Ausführungsbeispiel, Figur 2 zeigt Diagrammkurven, Figur 3 zeigt ein zweites Ausführungsbeispiel und Figur 4 zeigt Positionsbeispiele eines Fahrzeugs.

Beschreibung der Ausführungsbeispiele

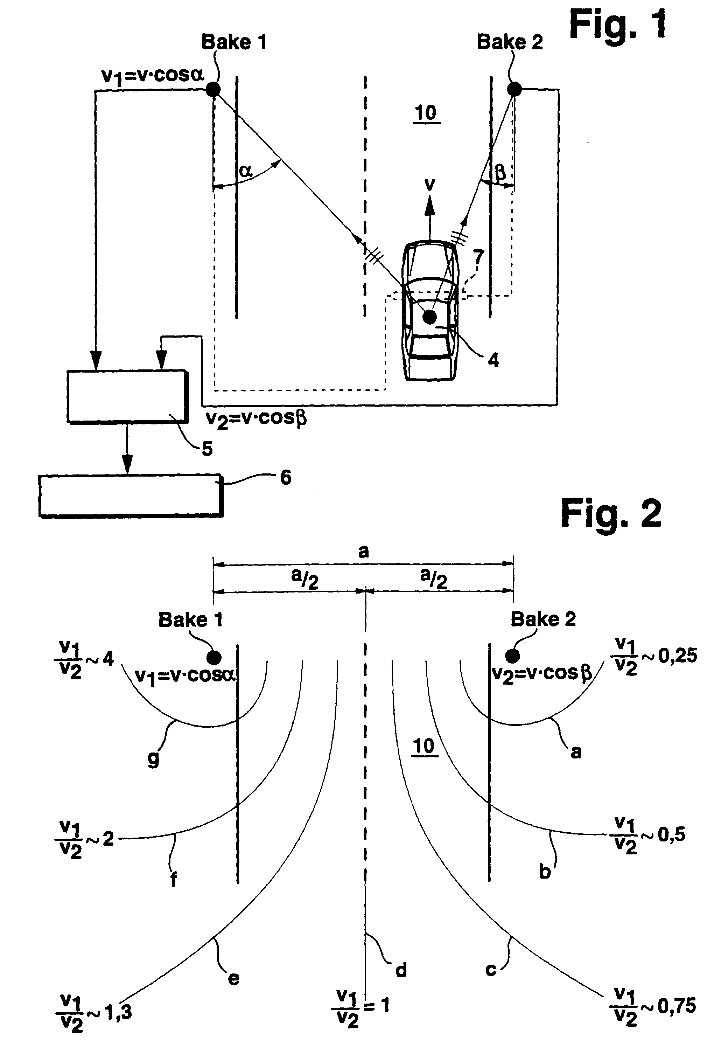

Figur 1 zeigt einen Ausschnitt aus einer Straße 10 mit zwei Fahrspuren, wobei sich ein Fahrzeug 4 auf der rechten Fahrspur in Richtung auf eine Bake 1 bzw. 2 bewegt. Das Fahrzeug 4 fährt mit der Geschwindigkeit v und hat ein Fahrzeuggerät (On-Board-Unit, OBU), mit dem es im Mikrowellenfrequenzbereich, vorzugsweise bei 5,8 GHz beispielsweise nach dem Transponderverfahren eine Datenübertragung zwischen den Baken 1, 2 durchführt. Die Baken 1, 2 haben entsprechende Sender mit ein oder zwei Antennen, die einen Teil der Straße 10 als Kommunikationszone ausleuchten. Ihre Sendefrequenzen können dabei entsprechend der DE-OS 42 13 880 eingestellt sein. Eine derartige Sende-/Empfangseinrichtung ist beispielsweise aus der DE 41 07 803 AI bekannt und muß daher nicht näher erläutert werden. Optional ist ein elektromagnetischer oder optischer Geber 7 beispielsweise als Induktionsschleife in der Fahrbahndecke eingebracht oder als Infrarotlichtschranke über der Fahrbahn oder am Fahrbahnrand angeordnet, der ein Signal an die Bake 1 und 2 zum Start der Datenübertragung oder Geschwindigkeitsmessung abgibt, wenn er durch ein Fahrzeug ausgelöst wird. Die Baken 1, 2 sind vorzugsweise rechts und links der Straße 10 angeordnet und bilden für eine bestimmte Fahrzeugposition mit dem Fahrzeug einen Winkel $\alpha$ bzw. $\beta$. Da die Baken 1, 2 symmetrisch zur Straßenmitte angeordnet sind, beträgt die relative Geschwindigkeit zur Bake 1 $v_1 = v * \cos\alpha$ und zur Bake 2 $v_2 = v * \cos\beta$. Die Baken 1, 2 liefern die beiden Geschwindigkeitsignale $v_1$, $v_2$ an eine Auswerteeinheit 5, die daraus die Fahrzeugposition 6 ermittelt.

Anhand der Figur 2 wird die Positionsbestimmung näher erläutert. In Figur 2 sind Linien mit gleichem Geschwindigkeitsverhältnis $v_1/v_2$ (Geschwindigkeitsprofile) aufgetragen. Die Baken 1, 2 sind wie in Figur 1 rechts und links und symmetrisch zur Fahrbahnmitte an der Straße 10 aufgestellt. Sie haben den Abstand a, so daß sie jeweils zu Straßenmitte den Abstand a/2 bilden. Würde nun ein Fahrzeug auf der Mittellinie der Straße 10 fahren, dann wäre zu jedem Zeitpunkt die von den Baken 1, 2 gemessene Geschwindigkeit gleich, d. h. das Verhältnis $v_1/v_2 = 1$. Fährt dagegen wie in Figur 1 das Fahrzeug mehr auf der rechten Seite der Straße 10, dann ist die relative Geschwindigkeit an Bake 1 kleiner als die zur Bake 2. Dieses wird durch die Kurven a, b und c ausgedrückt. Bei den Beispielen wurde vereinfachend angenommen, daß die Höhen der Baken und des Fahrzeuggerätes über der Straße gleich sind. Bei der Kurve a beträgt das Geschwindigkeitsverhältnis $v_1/v_2 = 0,25$, bei der Kurve b beträgt das Verhältnis $v_1/v_2 = 0,5$, und bei der Kurve c beträgt das Verhältnis $v_1/v_2 = 0,75$. Nähert sich das Fahrzeug dagegen auf der linken Fahrspur der Bake 1, dann ist die von der Bake 1 gemessene Geschwindigkeit größer als die von der Bake 2 gemessene Geschwindigkeit, da die Bake 2 weiter vom Fahrzeug entfernt ist als die Bake 1. Entsprechend sind die Geschwindigkeitsverhältnisse bei der Kurve e $v_1/v_2 = 1,3$, bei der Kurve f beträgt das Verhältnis $v_1/v_2 = 2$ und bei der Kurve g beträgt das Verhältnis $v_1/v_2 = 4$. Bei der Kurve d, der Mittellinie, beträgt das Verhältnis $v_1/v_2 = 1$.

Eine exakte Postionsbestimmung des Fahrzeugs ist mit zwei Baken nicht möglich. Durch die Verhältnisse

$$\frac{v_1}{v_2} = \frac{\cos\alpha}{\cos\beta}$$

lassen sich die Linien für beliebige mögliche Fahrzeugpositionen ermitteln. Ist eine derartige Fahrzeugposition ermittelt, dann kann dieses Geschwindigkeitverhältnis einem Erkennungscode zugeordnet werden, der mit der Datenübertragung zwischen einer Bake und dem Fahrzeug beispielsweise zur gezielten Übertragung von gebührenpflichtigen Diensten, die Abbuchung von Straßenbenutzungsgebühren, Überprüfung von Zufahrtsberechtigungen usw. kombiniert wird. Mit Hilfe des Erkennungscodes wird nur ein einziges Fahrzeug angesprochen, da jedes andere Fahrzeug in der Kommunikationszone ein anderes Geschwindigkeitsverhältnis hat und somit auch einen anderen Erkennungscode bekommt. Zur Kontrolle kann die Geschwindigkeitsmessung wiederholt, beispielsweise bei jeder Datenübertragung durchgeführt werden. Da die Geschwindigkeitsverhältnisse in etwa parallel zur Fahrtrichtung des Fahrzeugs verlaufen, je näher das Fahrzeug in den Bereich der Baken kommt, ergibt sich somit ein sicherer Erkennungscode für ein bestimmes Fahrzeug. Insbesondere ergibt sich auch zwischen zwei parallel fahrenden Fahrzeugen oder sich begegnenden Fahrzeugen auf zwei Nachbarspuren ein deutlich unterschiedliches Geschwindigkeitsverhältnis, da das Geschwindigkeitsverhältnis auf der rechten Spur stets kleiner als 1 und auf der linken Spur stets größer als 1 ist.

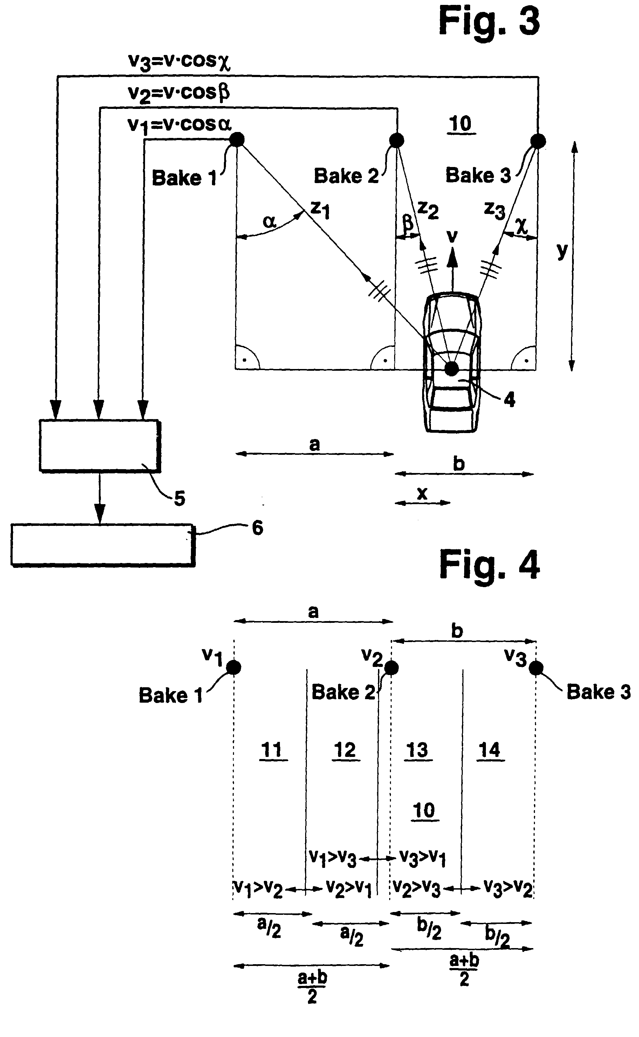

Eine genaue Ortsbestimmung ist gemäß der Figur 3 bei einem zweiten Ausführungsbeispiel möglich, bei dem drei Baken 1, 2, 3 verwendet werden. Die Anordnung der Baken 1, 3 erfolgt wie beim ersten Ausführungsbeispiel gemäß der Figur 1. Eine dritte Bake kann über der Straße, beispielsweise über der Mittellinie der Straße 10 angeordnet sein. Gemäß der Figur 3 bildet das Fahrzeug zu jeder Bake einen Fahrwinkel $\alpha$, $\beta$, $\chi$. Das Geschwindigkeitsverhältnis zwischen der ersten und zweiten Bake 1, 2 ist durch die nachfolgende Gleichung

$$\frac{v_1}{v_2} = \frac{\cos\alpha}{\cos\beta} \qquad \text{(Gleichung 1)}$$

bestimmt. Zwischen der Bake 2 und 3 beträgt das Geschwindigkeitsverhältnis

$$\frac{v_2}{v_3} = \frac{\cos\beta}{\cos\chi} \qquad \text{(Gleichung 2)}$$

Mit

$$\cos\alpha = \frac{y}{z_1} \; ; \; z_1 = \sqrt{y^2 + (a + x)^2}.$$

ergibt sich

$$\cos\alpha = \frac{y}{\sqrt{y^2 + (a + x)^2}} \qquad \text{(Gleichung 3)}$$

Entsprechend gilt

$$\cos\beta = \frac{y}{z_2} \; ; \; z_2 = \sqrt{y^2 + x^2}$$

Daraus ergibt sich

$$\cos\beta = \frac{y}{\sqrt{y^2 + x^2}} \qquad \text{(Gleichung 4)}$$

und mit

$$\cos\chi = \frac{y}{z_3} \; ; \; z_3 = \sqrt{y^2 + (b - x)^2}$$

ergibt sich

$$\cos\chi = \frac{y}{\sqrt{y^2 + (b - x)^2}} \qquad \text{(Gleichung 5)}$$

$z_1$, $z_2$, $z_3$ ist der jeweilige Abstand zwischen Fahrzeug und den Baken 1, 2, 3. Aus den fünf Gleichungen mit den fünf Unbekannten $\alpha$, $\beta$, $\chi$, x, y und den bekannten Größen $v_1$, $v_2$, $v_3$, a, b kann man die Koordinaten für die Fahrzeugposition x, y entsprechend der Figur 3 berechnen. Die einzelnen Parameter a, b, x, y, $z_1$, $z_2$, $z_3$, $\alpha$, $\beta$, $\chi$ sind der Figur 3 entnehmbar. Die Auswerteeinheit 5 kann beispielsweise ein Mikrorechner mit einem entsprechenden Programm sein, mit dem in Position 6 die Fahrzeugposition x, y nach den vorgegebenen Gleichungen berechnet wird.

Figur 4 zeigt zur Verdeutlichung dieser Zusammenhänge verschiedene Bereiche der Straße 10 mit den Baken 1, 2, 3 und mit den von den Baken gemessenen Fahrzeuggeschwindigkeiten $v_1$, $v_2$, $v_3$. Befindet sich beispielsweise das Fahrzeug auf der Spur 11, dann ist die gemessene Geschwindigkeit $v_1$ zur Bake 1 größer als die Geschwindigkeit $v_2$ zur Bake 2. Befindet sich das Fahrzeug hingegen in der Spur 12, dann ist die Fahrzeuggeschwindigkeit $v_2$ zur Bake 2 größer als die Geschwindigkeit $v_1$ zur Bake 1. Entsprechende Verhältnisse ergeben sich auf den Spuren 13 und 14, wenn sich das Fahrzeug den Baken 2 und 3 nähert. Auf der Spur 13 ist die Geschwindigkeit zur Bake 2 größer als die zur Bake 3, und entsprechend auf der Spur 14 ist die Geschwindigkeit zur Bake 3 größer als zur Bake 2. Des weiteren ist die Geschwindigkeit $v_3$ in den Spuren 13, 14 zur Bake 3 größer als die Geschwindigkeit $v_1$ zur Bake 1. Andererseits ist in den Spuren 11, 12 die Geschwindigkeit $v_1$ zur Bake 1 größer als die Geschwindigkeit $v_3$ zur Bake 3. Dieses ergibt sich aus den Symmetrieverhältnissen der Figur 4. Mit Hilfe dieser Darstellung können auch ohne Berechnung aus den gemessenen Geschwindigkeitswerten Bereiche für die Fahrzeugpositionen bestimmt werden. Kommuniziert das Fahrzeuggerät mit mehr als drei Baken, so läßt sich die Genauigkeit der Positionsbestimmung verbessern bzw. können Meßfehler kompensiert werden.

Mit Hilfe dieser Positionsbestimmungen können beim Datentransfer mit den Baken oder mit einer bevorzugten Bake beispielsweise gebührenpflichtige Dienste wie die Abbuchung von Straßenbenutzungsgebühren oder Zufahrtsberechtigungen für bestimmte Fahrbahnen, die beispielsweise für Linienbusse, Polizei oder Feuerwehr reserviert sind, geprüft und überwacht werden. Wird eine Ordnungswidrigkeit festgestellt, dann kann beispielsweise mit einer nachgeschalteten Fotoanlage das Fahrzeug automatisch fotografiert werden.

**Patentansprüche**

1. Verfahren zur Positionsbestimmung eines Fahrzeugs, das sich auf einer Straße in der Kommunikationszone eines kurzreichweitigen Sende-/Empfangsfeldes einer ersten Bake bewegt und mit seinem Fahrzeuggerät (OBU) eine Datenübertragung zur wenigstens einen Bake durchführt und wobei aus dem übertragenen Datensignal eine erste Geschwindigkeit des Fahrzeugs relativ zur ersten Bake ermittelt wird, dadurch gekennzeichnet,

   - daß wenigstens eine zweite Bake (2, 3) räumlich getrennt von der ersten Bake (1) im Straßenbereich, in dem sich das Fahrzeug (4) befindet, angeordnet ist, wobei sich beide Kommunikationszonen überlagern,

   - daß die wenigstens zweite Bake (2) aus dem übertragenen Datensignal eine zweite Fahrzeuggeschwindigkeit ($v_2$) relativ zu ihr ermittelt und

- daß aus dem Verhältnis der Geschwindigkeiten ($v_1$, $v_2$) die Position des Fahrzeugs (4) auf der Straße (10) ermittelt wird, in der eine gezielte Datenübertragung zu diesem Fahrzeug durchführbar ist.

2. Verfahren nach Anspruch 1, dadurch gekennzeichnet, daß das Fahrzeug (4) den Start der Geschwindigkeitsmessungen ($v_1$, $v_2$) der Baken (1, 2) vorzugsweise zum gleichen Zeitpunkt auslöst.

3. Verfahren nach Anspruch 1 oder 2, dadurch gekennzeichnet, daß bei jeder Datenübertragung vom Fahrzeug (4) zu den Baken (1, 2) bei beiden Baken (1, 2) eine Geschwindigkeitsmessung vorgenommen wird.

4. Verfahren nach einem der Ansprüche 1 bis 3, dadurch gekennzeichnet, daß der Start der Geschwindigkeitsmessungen ($v_1$, $v_2$) durch einen elektromagnetischen oder optischen Geber (7) ausgelöst wird.

5. Verfahren nach einem der vorhergehenden Ansprüche, dadurch gekennzeichnet, daß eine dritte Bake (3) zur Geschwindigkeitsmessung verwendet wird, die von der ersten und zweiten Bake (1, 2) derart räumlich getrennt angeordnet ist, daß zwischen dem Fahrzeug (4) und den drei Baken (1, 2, 3) gleichzeitig oder innerhalb eines kurzen Zeitabschnittes eine Datenübertragung stattfindet.

6. Verfahren nach Anspruch 5, dadurch gekennzeichnet, daß die drei Baken (1, 2, 3) auf eine Fahrspur gerichtet sind und vorzugsweise rechts, links und oberhalb der Fahrspur vorzugsweise symmetrisch zur Fahrbahnmitte angeordnet sind.

7. Verfahren nach einem der vorhergehenden Ansprüche, dadurch gekennzeichnet, daß die Geschwindigkeitsmessungen ($v_1$, $v_2$, $v_3$) in einem vorgegebenen, zeitlichen Abstand wiederholt durchgeführt werden.

8. Verfahren nach einem der vorhergehenden Ansprüche, dadurch gekennzeichnet, daß die Datenübertragungen zwischen einem bevorzugten Fahrzeug (4) und wenigstens einer oder mehrerer Baken (1, 2, 3) in Abhängigkeit von dem ermittelten Geschwindigkeitsprofil durchgeführt wird.

9. Verfahren nach Anspruch 8, dadurch gekennzeichnet, daß die Datenübertragungen für vorgegebene Dienste, vorzugsweise zur Gebührenabbuchung oder Prüfung einer Fahrberechtigung verwendet werden.

10. Verfahren nach Anspruch 8 oder 9, dadurch gekennzeichnet, daß bei Verstoß gegen die Vorschriften der Dienste Beweissicherungsmaßnahmen, vorzugsweise Fotografieren des Fahrzeugs, durchgeführt werden.

**Claims**

1. Method for determining the position of a vehicle which is moving on a road in the communication zone of a short range transceiving field of a first beacon and uses a vehicle unit (OBU) to transmit data to the at least one beacon, a first speed of the vehicle relative to the first beacon being determined from the transmitted data signal, characterized

- in that at least a second beacon (2, 3) is arranged spatially separated from the first beacon (1) in the region of the road in which the vehicle (4) is located, the two communication zones overlapping,
- in that the at least second beacon (2) determines from the transmitted data signal a second vehicle speed ($v_2$) relative to it, and
- in that the ratio of the speeds ($v_1$, $v_2$) is used to determine the position of the vehicle (4) on the road (10) at which data can be specifically transmitted to this vehicle.

2. Method according to Claim 1, characterized in that the vehicle (4) preferably triggers the start of the speed measurements ($v_1$, $v_2$) of the beacons (1, 2) at the same instant.

3. Method according to Claim 1 or 2, characterized in that a speed measurement is undertaken at both beacons (1, 2) with each transmission of data from the vehicle (4) to the beacons (1, 2).

4. Method according to one of Claims 1 to 3, characterized in that the start of the speed measurements ($v_1$, $v_2$) is triggered by an electromagnetic or optical transmitter (7).

5. Method according to one of the preceding claims, characterized in that to measure the speed use is made of a third beacon (3) which is arranged spatially separated from the first and second beacon (1, 2) in such a way that data are transmitted between the vehicle (4) and the three beacons (1, 2, 3) simultaneously or within a short time period.

6. Method according to Claim 5, characterized in that the three beacons (1, 2, 3) are directed onto one lane and are preferably arranged to the right of, to the left of and above the lane, preferably symmetrically relative to the middle of the roadway.

7. Method according to one of the preceding claims, characterized in that the speed measurements ($v_1$, $v_2$, $v_3$) are repeated at a prescribed time interval.

8. Method according to one of the preceding claims, characterized in that the data are transmitted between a preferred vehicle (4) and at least one or more beacons (1, 2, 3) as a function of the speed profile determined.

9. Method according to Claim 8, characterized in that the data transmissions are used for prescribed services, preferably for debiting charges or checking a permit to drive.

10. Method according to Claim 8 or 9, characterized in that in the event of violation of the regulations of the services, evidence-preserving means, preferably photographing the vehicle, are implemented.

**Revendications**

1. Procédé pour déterminer la position d'un véhicule circulant sur une route dans la zone de communication d'un champ d'émission/réception de courte portée d'une première borne, ainsi qu'un appareil (OBU) équipant le véhicule, pour effectuer une transmission de données vers au moins une borne, et à partir du signal de données transmis on détermine une première vitesse du véhicule par rapport à la première borne, caractérisé en ce qu'

   • on a au moins une seconde borne (2, 3) géographiquement séparée de la première borne (1) dans la zone de la chaussée dans laquelle se trouve le véhicule (4), les deux zones de communication se chevauchant,
   • au moins la seconde borne (2) détermine, à partir du signal de données transmis, une seconde vitesse de véhicule ($v_2$) par rapport à cette borne et,
   • à partir du rapport des vitesses ($v_1$, $v_2$) on détermine la position du véhicule (4) sur la chaussée (10), dans laquelle on peut transmettre des données, vers ce véhicule.

2. Procédé selon la revendication 1, caractérisé en ce que le véhicule déclenche le départ des mesures de vitesse ($v_1$, $v_2$) des bornes (1, 2) de préférence au même instant.

3. Procédé selon la revendication 1 ou 2, caractérisé en ce qu' à chaque transmission de données par le véhicule (4) vers les bornes (1, 2), ces deux bornes (1, 2) effectuent une mesure de vitesse.

4. Procédé selon l'une des revendications 1 à 3, caractérisé en ce qu' on déclenche le départ des mesures de vitesse ($v_1$, $v_2$) par un capteur électromagnétique ou optique (7).

5. Procédé selon l'une des revendications précédentes, caractérisé en ce qu' on utilise une troisième borne (3) pour mesurer la vitesse, cette troisième borne étant géographiquement séparée de la première et seconde borne (1, 2) pour qu'entre le véhicule (4) et les trois bornes (1, 2, 3), il y ait une transmission de données simultanément ou à l'intérieur d'un court segment de temps.

6. Procédé selon la revendication 5, caractérisé en ce que les trois bornes (1, 2, 3) sont dirigées sur.une voie de circulation et sont prévues de préférence à droite, à gauche et au-dessus de la voie de circulation, notamment symétriquement par rapport au milieu de la voie de circulation.

7. Procédé selon l'une des revendications précédentes, caractérisé en ce que les mesures de vitesse ($v_1$, $v_2$, $v_3$) sont effectuées de manière répétée suivant un intervalle de temps prédéterminé.

8. Procédé selon l'une des revendications précédentes, caractérisé en ce que les transmissions de données entre un véhicule préférentiel (4) et au moins une ou plusieurs bornes (1, 2, 3) sont faites en fonction du profil de vitesse obtenu.

9. Procédé selon la revendication 8, caractérisé en ce que les transmissions de données sont utilisées pour des services prédéterminés, de préférence pour des calculs de taxes ou pour le contrôle de l'autorisation de circuler.

10. Procédé selon la revendication 8 ou 9, caractérisé en ce qu' en cas de non respect des prescriptions des services, des moyens de preuves sont mis en oeuvre, notamment la photographie du véhicule.

EP 0 789 898 B1

# Fig. 1

Bake 1        Bake 2

$v_1 = v \cdot \cos\alpha$

$\alpha$        $\beta$

10

v

7

4

$v_2 = v \cdot \cos\beta$

5

6

# Fig. 2

a

a/2        a/2

Bake 1        Bake 2

$\frac{v_1}{v_2} \sim 4$        $v_1 = v \cdot \cos\alpha$        $v_2 = v \cdot \cos\beta$        $\frac{v_1}{v_2} \sim 0,25$

g        a

$\frac{v_1}{v_2} \sim 2$        10        $\frac{v_1}{v_2} \sim 0,5$

f        b

e        d        c

$\frac{v_1}{v_2} \sim 1,3$        $\frac{v_1}{v_2} = 1$        $\frac{v_1}{v_2} \sim 0,75$

7

# Fig. 3

$v_3 = v \cdot \cos \chi$

$v_2 = v \cdot \cos \beta$

$v_1 = v \cdot \cos \alpha$

Bake 1

Bake 2

Bake 3

$\underline{10}$

$\alpha$ $z_1$

$\beta$ $z_2$

$z_3$ $\chi$

$v$

$y$

4

$a$

$b$

$x$

5

6

# Fig. 4

$a$

$b$

$v_1$ Bake 1

$v_2$ Bake 2

$v_3$ Bake 3

$\underline{11}$ $\underline{12}$ $\underline{13}$ $\underline{14}$

$\underline{10}$

$v_1 > v_3$ $\leftarrow$ $\rightarrow$ $v_3 > v_1$

$v_1 > v_2$ $\leftarrow$ $\rightarrow$ $v_2 > v_1$ $v_2 > v_3$ $\leftarrow$ $\rightarrow$ $v_3 > v_2$

$a/2$ $a/2$ $b/2$ $b/2$

$\frac{a+b}{2}$ $\frac{a+b}{2}$